# EUROPÄISCHE PATENTSCHRIFT

(11) **EP 1 919 658 B1**
(45) Veröffentlichungstag und Bekanntmachung des Hinweises auf die Patenterteilung: **17.06.2009**
(21) Anmeldenummer: 06791580.1
(22) Anmeldetag: 16.08.2006
(51) Int. Cl.: B23Q 17/09, B23Q 17/20

(54) **BEARBEITUNGSVORRICHTUNG MIT VERMESSUNGSEINRICHTUNG FÜR EIN MODELL**
MACHINING DEVICE COMPRISING A MEASURING DEVICE FOR A MODEL
DISPOSITIF D'USINAGE AVEC DISPOSITIF DE MESURE POUR UN MODELE

(30) Priorität: 16.08.2005 DE 102005039010
(43) Veröffentlichungstag der Anmeldung: 14.05.2008
(73) Patentinhaber: Sirona Dental Systems GmbH, 64625 Bensheim (DE)
(72) Erfinder: BASLER, Franz, 69514 Laudenbach (DE)
(74) Vertreter: Sommer, Peter
(86) Internationale Anmeldenummer: PCT/EP2006/008084
(87) Internationale Veröffentlichungsnummer: WO 2007/020072

(56) Entgegenhaltungen:
- WO-A-96/13355
- DE-A1- 4 030 185
- DE-A1- 10 345 993
- US-A- 4 581 808
- US-A- 5 392 122

## Beschreibung

### Technisches Gebiet

Die Erfindung betrifft ein Verfahren zur Steuerung einer Bearbeitungs maschine nach dem Oberbegriff von Anspruch 1. Bearbeitungswerkzeuge nutzen sich während des Einsatzes ab. Die Abnutzungserscheinungen sind unterschiedlicher Natur, beispielsweise findet bei kegelförmigen Bearbeitungswerkzeugen eine Abplattung der Spitze statt. Bei zylindrischen Werkzeugen verändert sich der Durchmesser in unterschiedlicher Weise. Ebenso bilden sich teilweise Vertiefungen auf der Stirnseite des Bearbeitungswerkzeuges.

### Stand der Technik

Bei langkegligen Instrumenten wird eine Längenmessung durchgeführt und damit auf den Abplattungsgrad der Spitze und die Abnutzung der Mantelfläche geschlossen. Diese veränderte Kontur wird bei der Berechnung des Bearbeitungsplans berücksichtigt. Bei zylindrischen Werkzeugen oder Standardkegel-Werkzeugen wird zusätzlich zu der Längenmessung eine Radiusmessung der Mantelfläche in Zusammenhang mit einem weiteren Touchier-Vorgang durchgeführt. Diese Werte fließen ebenfalls in die Berechnung des Beareitungsplans ein.

Aus der DE 40 30 175 A1 ist eine Schleifmaschine bekannt, bei der zur Kalibrierung der Startposition mit einer Gabellichtschranke verschiedene bekannte Größen gemessen werden. Aus der Abweichung der gemessenen Größen, gegenüber den Sollgrößen wird ein Steuerprogramm bzw. die Ausgangsposition korrigiert. Das Werkzeug wird auf eine Referenzfläche hin in kleinen Schritten zugestellt und der zurückgelegte Weg wird gemessen. Berührt das langsam drehende Werkzeug die Referenzfläche, wird die Drehzahlveränderung festgestellt. Dies wird als Touchieren bezeichnet.

In der DE 199 50 780 A1 ist eine Bearbeitungseinrichtung gezeigt, welche eine Aufnahmeeinrichtung und eine Vermessungseinrichtung umfasst. Zunächst wird mit der Vermessungseinrichtung ein Modell des aus einem Werkstück herzustellenden Gegenstandes vermessen. Anschließend wird der Gegenstand aus dem Werkstück herausgearbeitet. Die Vermessungseinrichtung ist als Abstandssensor ausgebildet.

Die DE 689 27 719 T2 offenbart eine numerisch gesteuerte Werkzeugmaschine. Die Werkzeugmaschine umfasst Vorrichtungen zur Fehlerkorrektur von durch Abweichungen der Bearbeitungsabmessungen eines Werkstückes oder Abweichungen einer Werkzeuglänge entstehenden Bearbeitungsungenauigkeiten. Dazu wird zuerst eine provisorische Bearbeitung durchgeführt und im Anschluss daran die Positionen oder Höhen der Bearbeitungsoberfläche und einer feststehenden Referenzfläche mittels einer Bearbeitungsabmessungsmessvorrichtung gemessen. Die Referenzflächen sind auf einer Spannvorrichtung oder auf einem Referenzblock angeordnet ist.

In der DE 40 30 185 A1 wird ein Verfahren zum Kalibrieren eines motorisch angetriebenen Werkzeuges in Bezug auf ein mit diesem zu bearbeitenden Werkstück sowie eine Vorrichtung zur Durchführung des Verfahrens offenbart. Gemäß einer Ausführungsform kann dabei an dem Werkstück mittels eines Werkzeuges ein Absatz erstellt werden, der mittels einer Leuchtdiode beleuchtet wird. Der Schattenwurf des beleuchteten Absatzes wird mittels eines Sensorelements vermessen und daraus Rückschlüsse auf die Abmessungen des Werkzeuges gezogen.

Ein Verfahren zur Bestimmung aktueller Positionsdaten eines Bearbeitungswerkzeugs ist in der DE 101 04 287 A1 beschrieben. Hier wird das Werkzeug auf eine Referenzfläche des Werkstücks zugestellt, wobei die Referenzfläche dabei an dem Werkzeug vorbeibewegt wird. Bei der Berührung des Werkzeuges mit der Referenzfläche entsteht ein wenn auch geringer Materialabtrag, welcher das Werkzeug abbremst und daraus eine Positionsbestimmung des Werkzeugs ermöglicht.

Aus der WO 96/13355 ist ein gattungsgemässes Verfahren bekannt. Auf einer Referenzfläche eines Werkstücks wird mittels eines Bearbeitungswerkzeugs eine ringförmige Vertiefung erzeugt, die vermessen wird. Die Spitze des Bearbeitungswerkzeugs wurde dabei vor der Bearbeitung und vor der Herstellung der Vertiefung vermessen.

Auch aus der US 5,392,122 ist bekannt, dass eine Vermessung einer umlaufenden Vertiefung stattfindet, und zwar mit Hilfe eines Sensors, der entlang einer Längsvorschubrichtung in ein bereits bearbeitetes Werkstück eingeführt wird und quer zu der Längsvorschubrichtung Messungen durchführt. Bei dieser Vertiefung handelt es sich offensichtlich um eine nach einem Konstruktionsplan herzustellende Nut, die üblicherweise von der Geometrie des Bearbeitungswerkzeugs unabhängig ist.

Die Aufgabe der Erfindung besteht darin, dass die Bearbeitung des Werkzeugs mit größerer Genauigkeit druchgeführt wird.

### Offenbarung der Erfindung

Gegenstand der Erfindung ist ein Verfahren zur Steuerung einer Bearbeitungsmaschine gemäss Anspruch 1.

Vorteilhafterweise kann das Einbringen der Kontur mit einer relevanten Werkzeugbelastung erfolgen. Damit ist eine typische Belastung während des Bearbeitungsvorgangs gemeint, so dass die relevanten Effekte, die das Ergebnis des Schleifprozesses beeinflussen, wie Biegung des Werkzeugs, Konturveränderungen des Werkzeugs, Stabilität der Maschine und Materialeigenschaften unter einer tatsächlichen Bearbeitungssituation erfasst werden. Damit unterscheidet sich dieser Vorgang von einem Touchiervorgang zur Bestimmung der Werkzeugpositionen beziehungsweise zur Lagebestimmung des Werkstücks in der Bearbeitungsmaschine.

Vorteilhafterweise ist eine Referenzfläche, die Teil des Werkstücks ist in einem Bereich außerhalb des eigentlichen Bearbeitungsbereichs des Werkstücks angeordnet, welcher bei der Endbearbeitung des Werkstücks keine Rolle spielt, wobei die Kontur in diese Referenzfläche eingebracht ist. Vorteilhafterweise kann das Einbringen der Kontur an einer Referenzfläche erfolgen, besser aber noch im zu bearbeitenden Material.

Eine zur Durchführung des Verfahrens gemäß der Erfindung geeignete Bearbeitungsmaschine umfasst ein Werkstück, eine Vermessungseinrichtung und mindestens ein Bearbeitungswerkzeug für das zu bearbeitende Werkstück und eine Aufnahme für das zu bearbeitende Werkstück. Das Werkstück weist eine Referenzfläche auf, die so am Werkstück angeordnet ist, dass an dieser Referenzfläche einerseits mittels des Bearbeitungswerkzeugs eine Kontur herstellbar ist und andererseits die Kontur von der Vermessungseinrichtung nach der Bearbeitung vermessen werden kann.

Durch die Vermessung der mit dem Bearbeitungswerkzeug hergestellten Kontur kann der Zustand der Werkzeugspitze genauer festgestellt werden.

Weiterhin können Mittel zur Bestimmung der Lage des Bearbeitungswerkzeuges bezüglich einer Bearbeitungsachse umfasst sein.

Die Vermessungseinrichtung kann ein Abstandssensor, insbesondere ein Punktsensor sein.

Weiterhin kann eine Auswerteeinrichtung vorgesehen sein, mittels welcher die mit der Vermessungseinrichtung erfassten Daten der Kontur auswertbar sind und ein Bearbeitungsplan anpassbar ist.

### Kurze Beschreibung der Zeichnungen

Das erfindungsgemäße Verfahren wird anhand der Zeichnung erläutert. Es zeigen:
- Fig. 1: ein zahnärztliches Gerät zur Erfassung einer dentalen Präparation und zur Konstruktion eines Zahnersatzteils sowie zur Bearbeitung eines Roh- lings zur Herstellung des Zahnersatzteils, die
- Fig. 2: eine Bearbeitungsvorrichttung mit den wesentlichen Komponenten, die
- Fig. 3: das Zusammenwirken des Bearbeitungswerkzeugs mit dem Werkstück, die
- Fig. 4A,B: ein Bearbeitungswerkzeugs in Form eines Langke- gelschleifers, die
- Fig. 5A,B: ein Bearbeitungswerkzeug in Form eines Zylinder- schleifers, die
- Fig. 6: das Eindringen des Bearbeitungswerkzeugs in das Werkstück und die
- Fig. 7: eine sich einstellende Kontur. Ausführungsbeispiel der Erfindung

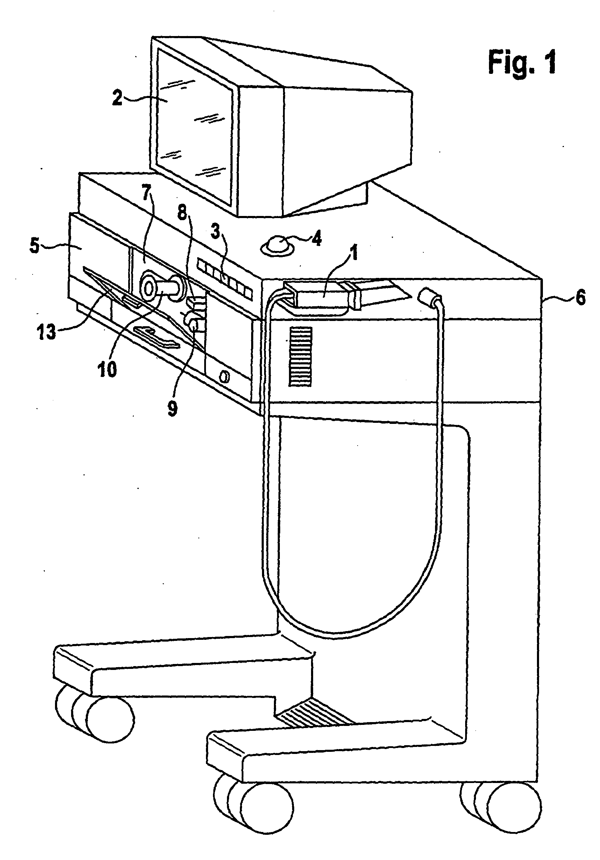

In Fig. 1 ist eine Gesamtanordnung einer zahnärztlichen Bearbeitungsmaschine 5 zur Herstellung eines Zahnrestaurations-Passkörpers gezeigt. Die einzelnen Komponenten der Bearbeitungsmaschine 5 sind eine optische Kamera 1, ein Bildschirm 2, eine Tastatur 3, eine Zeichenkugel 4, eine allgemein mit 5 bezeichnete Bearbeitungsmaschine sowie in einem Gehäuse 6 enthaltene, nicht mehr dargestellte weitere mechanische, elektrische und elektronische Komponenten. Der prinzipielle Aufbau eines derartiges Gerätes ist aus der DE 40 30 175 A1 bekannt.

In dem Gehäuse 6 ist eine Bearbeitungskammer 7 vorhanden, in der eine Aufnahme- und Haltevorrichtung für ein Werkstück 8, aus dem der zu erstellenden Passkörper gefertigt wird sowie zwei einander gegenüberliegende Spindelanordnungen 9 und 10, welche je zwei Werkzeuge zur Bearbeitung des Werkstücks 8 tragen, gebildet. Die Bearbeitungskammer 7 kann mittels eines Deckels 13 während der Bearbeitung geschlossen werden. Anstelle der Kamera 1 kann in der Bear beitungskammer 7 eine (nicht dargestellte) Vermessungseinrichtung angeordnet sein, wie es beispielsweise aus der DE 199 50 780 A1 bekannt ist.

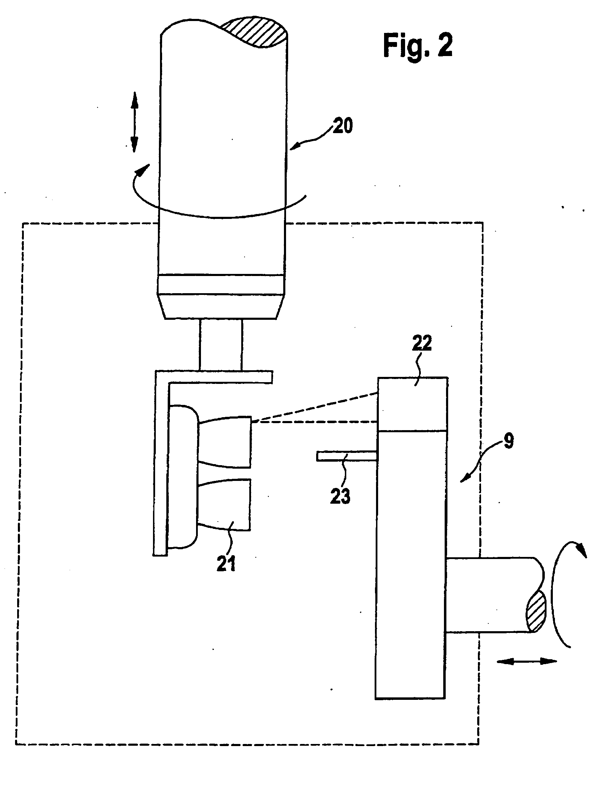

In Fig. 2 ist die Bearbeitungsmaschine 5 zur Durchführung des erfindungsgemäßen Verfahrens anhand der wesentlichen Komponenten näher erläutert. Dargestellt ist eine Aufnahme 20 für das Werkstück 8 oder, wie dargestellt, für ein Modell 21 sowie eine an der Werkzeugspindel 9 angeordnete Vermessungseinrichtung 22, mit welcher das Modell 21 vermessen werden kann. Die Aufnahme 20 ist dabei so ausgebildet, dass in einem ersten Zustand das Modell 21 zum Zweck der Vermessung befestigt wird und in einem zweiten Zustand das Werkstück 8 zum Zweck der Bearbeitung mit dem Bearbeitungswerkzeug 23 befestigt wird.

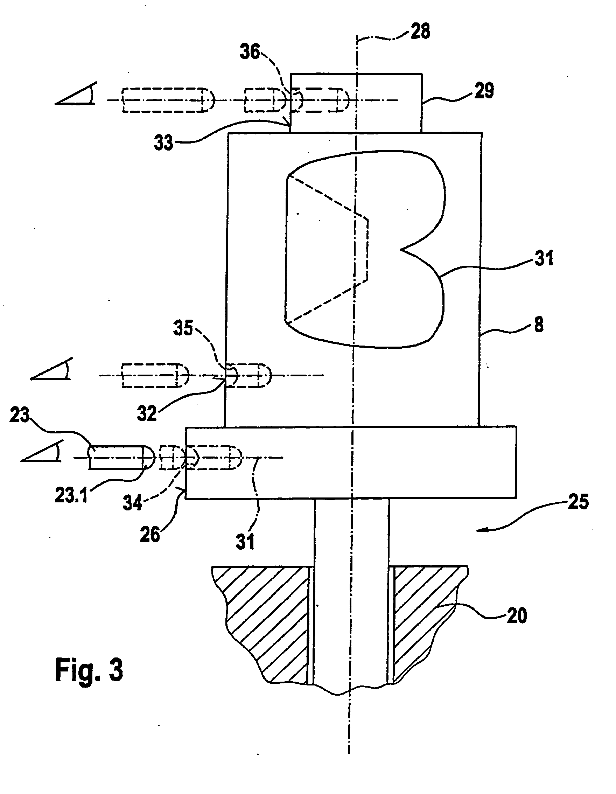

In Fig. 3 ist dargestellt, auf welche Art und Weise ein Bearbeitungswerkzeug 23 mit dem Werkstück 8 zusammenwirkt. Das Werkstück 8 selbst ist auf einem Halter 25 befestigt, welcher wiederum in der Aufnahme 20 befestigt ist. An dem Halter 25 kann eine Referenzfläche 26 für einen Touchiervorgang vorgesehen sein, um die genaue Lage des Werkzeugs 23 bezüglich einer Bearbeitungsachse 28 festzustellen. Die Referenzfläche 26 kann auch auf einem am Werkstück 8 angeordneten Referenzkörper 29 liegen und damit unabhängig vom Halter 25 sein.

Das Bearbeitungswerkzeug 23 lässt sich in eine Position bringen, welche außerhalb des eigentlichen Bearbeitungsbereichs, dargestellt durch die in das Werkstück 8 eingezeichnete Krone 30 als Beispiel eines herzustellenden Zahnersatzteils, liegt, beispielsweise am Halter 25, am Werkstück 8 selbst oder auf dem Referenzkörper 29.

Das Werkzeug 23 wird auf eine dafür vorgesehene Referenzfläche 26 entlang seiner Längsachse 31 zugestellt und es wird in einem ersten Schritt ein Touchiervorgang ausgeführt, d.h. die Berührung des Werkzeugs 23 und der Referenzfläche 26, 32 oder 33 wird erfasst und zur Bestimmung der Position des Werkzeugs 23 verwendet. Ist die Lage der Werkzeugspitze 23.1 bereits bekannt, kann auf diesen Touchiervorgang verzichtet werden.

Der weitere Vorschub des Werkzeugs 23 bewirkt eine Bearbeitung der Referenzfläche 26 dergestalt, dass eine Kontur 34 herausgearbeitet wird, welche dem Werkzeug 23 entspricht, wobei das Werkzeug 23 ein rotierendes Werkzeug ist und die erzeugte Kontur 34 daher rotationssymmetrisch ist.

Die Eindringtiefe des Werkzeugs 23 hängt von der gewünschten Art der Auswertung ab. Bei einem Zylinderschleifer kann die Eindringtiefe etwa die Größe des Durchmessers, bei einem Langkegelschleifer mit Spitzenradius etwa der 5-fache Spitzenradius und bei einem Kegelschleifer etwa die einfache Kegelhöhe betragen.

Es ist besonders vorteilhaft, wenn die Kontur 35 im Werkstück 8 selbst erzeugt wird, weil dort das Bearbeitungswerkzeug 23 genau die selben Wirkungen hervorruft wie bei der Herausarbeitung des herzustellenden Werkstücks 8. Eine Konturerzeugung in einem Halter aus Kunststoff oder einem Passkörper aus Stahl kann bereits aufgrund des gegenüber dem Werkstück 8 unterschiedlichen Werkstoffes die Aussagekraft der Vermessung beeinträchtigen. Dabei ist es besonders vorteilhaft, die Kontur 35 mit den relevanten Belastungen des Werkzeugs 23 zu erzeugen. Diese Belastungen sind abhängig von dem Vorschub in den verschiedenen Richtungen und der im Eingriff befindlichen Bearbeitungsfläche.

Zusätzlich zu der Erzeugung einer Kontur 34, 35 oder 36 in Längsvorschubrichtung des Bearbeitungswerkzeugs 23 wird eine Kontur in Querrichtung durch einen Querseitenvorschub erzeugt, aus welcher sich Rückschlüsse über die Biegung des Werkzeugs 23 unter Last ziehen lassen. So ist es vorteilhafterweise vorgesehen, das Werkzeug 23 ein Stück weit in das Werkstück 8 hinein in Längsrichtung zuzustellen, um einen Vorschub in Querrichtung zu erzeugen, der eine vorbestimmte Bearbeitungsstrecke vorgibt, wobei das Werkzeug wieder aus dem Werkstück 8 herausgefahren wird. Abhängig von der Biegung des Werkzeugs 23 wird die Bearbeitung in Querrichtung mehr oder weniger vollständig durchgeführt werden.

Nach der Herstellung der Kontur 34 oder der Konturen 35 oder 36 erfolgt eine Vermessung der hergestellten Kontur 34 oder Konturen 35 oder 36. Diese Vermessung erfolgt mit dem in der Bearbeitungsvorrichtung 5 zur Vermessung des Modells 21 vorhandenen Vermessungseinrichtung 22. Dazu ist die Vermessungseinrichtung 22 so ausgebildet, dass mit ihr der Bereich, in dem die Kontur 34 erzeugt wurde, ebenfalls vermessen werden kann. Die Lage der zu vermessenden Kontur 34 ist bekannt, so dass die Vermessungsvorrichtung 22 gezielt auf diesen Bereich ausgerichtet wird.

Die durch die Vermessung der Kontur 34 gewonnenen Daten lassen einen Rückschluss auf den Zustand der verwendeten Bearbeitungswerkzeuge 23 zu und darüber hinaus auch auf die relevanten Effekte, die das Ergebnis des Schleifprozesses beeinflussen, wie Biegung des Werkzeugs 23, Konturveränderungen des Werkzeugs 23, Stabilität der Maschine und Effekte durch das Material und in einer Auswerteeinrichtung werden diese Daten bei der Berechnung des Bearbeitungsplans bzw. zur Korrektur des Bearbeitungsplans verwendet. Dies gilt sowohl bezüglich der Geometrie des Bearbeitungswerkzeugs 23 als auch bezüglich des Biegeverhaltens des Bearbeitungswerkzeugs 23.

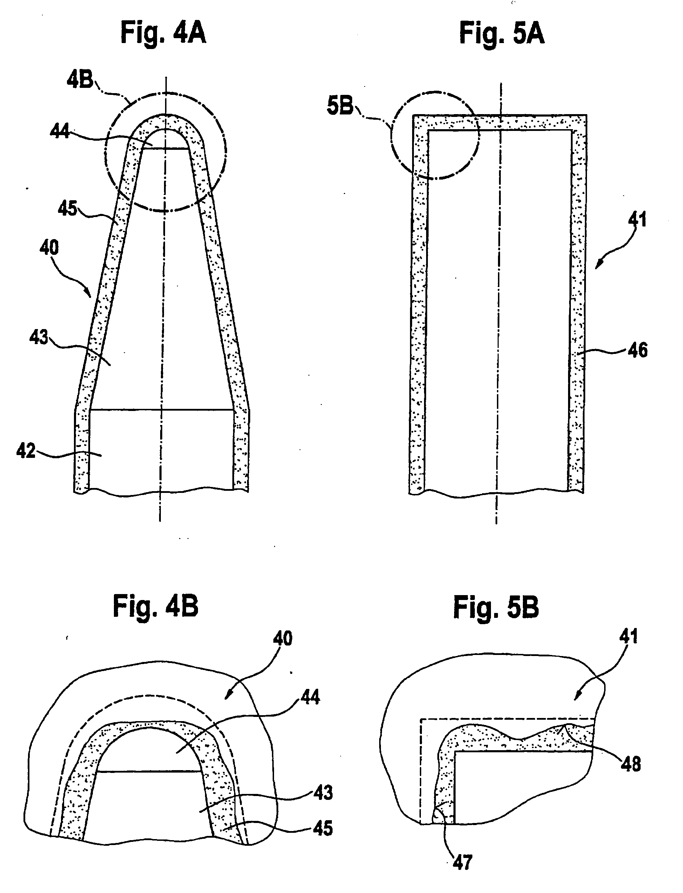

In den Fig. 4A, 4B und 5A, 5B sind typische Bearbeitungswerkzeuge in Form eines Langkegelschleifers 40, Fig. 4, und eines Zylinderschleifers 41, Fig. 5, dargestellt. Der Langkegelschleifer 40 gemäß Fig. 4a weist einen Schaft 42 mit einem Kerndurchmesser auf, an den sich ein sich zur Spitze hin verjüngender kegelförmiger Bereich 43 anschließt mit einem Kegelwinkel zwischen 4° und 20°,wobei die Spitze 44 selbst als Kugelspitze mit einem Radius ausgeführt ist. Der Langkegelschleifer 40 ist mit einer Beschichtung 45 versehen, welche im gesamten Bereich im wesentlichen die selbe Schichtdicke aufweist. Diese Schichtdicke beträgt im Neuzustand ca. 200 x 10⁻⁶ m und wird verschleißbedingt abgenutzt bis zu einer Schichtdicke von etwa 50 x 10⁻⁶ m, bevor das Bearbeitungswerkzeug 40 ersetzt wird. Selbstverständlich ist es möglich, in besonders belasteten Bereichen eine größere Schichtdicke vorzusehen, wofür insbesondere die Spitze 44 in Frage kommt. Aufgrund der Vermessung der Spitze 44 gemäß der vorliegenden Erfindung ist es möglich, auch größere Schichtdicken vorzusehen und damit größere Abnutzungen zuzulassen, bevor das Werkzeug 40 als verschlissen angesehen wird.

In Fig. 4B ist dargestellt, wie sich die Außenkontur des Werkzeugs 40 durch die verschleißbedingte Abnutzung verändert. Insbesondere findet im Bereich der Spitze 44 eine Abplattung statt. Im Bereich des Langkegels 43 ist hingegen eine gleichmäßige Verringerung der Schichtdicke der Beschichtung 45 dargestellt.

Bei dem in Fig. 5A dargestellten Zylinderschleifer 41 ist die Beschichtung 46 auf einem Kerndurchmesser aufgebracht, wobei von einer gleichmäßigen Schichtdicke ausgegangen wurde. In Fig. 5B ist dargestellt, wie sich die Außenkontur des Zylinderschleifers 41 auf Grund verschleißbedingter Abnutzung verändert hat. Es ist zu erkennen, dass insbesondere im Bereich der Kante zwischen Mantelfläche 47 und Stirnseite 48 des Schleifers 41 eine besonders große Abnutzung vorliegt.

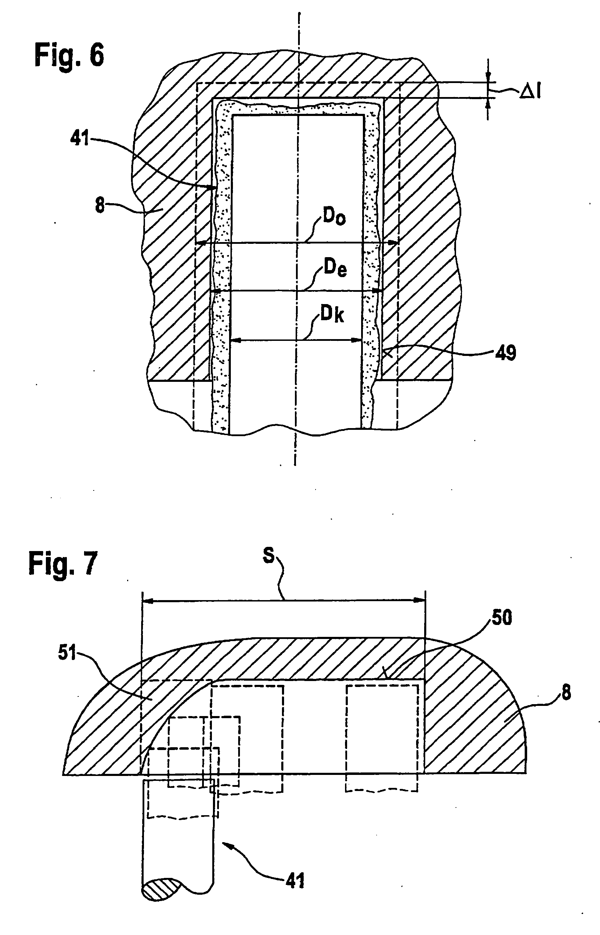

In Fig. 6 ist dargestellt, auf welche Weise das Bearbeitungswerkzeug 41 gemäß Fig. 5 in das Werkstück 8 eindringt und dort eine Kontur 49 herausarbeitet, welche anschließend vermessen wird. Das neue Werkzeug 41 hat einen Nenndurchmesser D₀ und einen aufgrund der bereits erfolgten Verwendung des Werkzeugs 41 verringerten effektiven Durchmesser Dₑ bei einem Kerndurchmesser Dₖ. Die im Werkstück 8 erzeugte Kontur hat daher einen Innendurchmesser in der Größenordnung des effektiven Durchmesser Dₑ, welcher sich durch Vermessung erfassen lässt. Darüber hinaus lässt sich im Wege der Vermessung auch die Tiefe der Kontur 49 ermitteln, so dass dann, wenn die Lage der Oberfläche des Werkstücks 8 bekannt ist, unmittelbar auf die räumliche Position des Werkzeugs 41 geschlossen werden kann. Dies ist insbesondere von Bedeutung zur Feststellung der durch die Abnutzung des Werkzeugs 41 entstandenen Längenänderung Δl.

Die Lage der Kontur 49 in dem Koordinatensystem der Bearbeitungsmaschine lässt sich beispielsweise dadurch feststellen, dass eine Referenzfläche vermessen oder mit dem Bearbeitungswerkzeug 41 touchiert wird, wobei bei rotationssymmetrischen Referenzflächen in der Regel mehrere Touchiervorgänge bzw. Vermessungen erforderlich sind, um Exzentrizitäten der Referenzfläche bezüglich der Bearbeitungsachse 28 zu berücksichtigen. Derartige Touchiervorgänge sind im Stand der Technik hinlänglich bekannt.

Bei bekannter Lage des Bearbeitungswerkzeugs 41 bzw. eines Messpunktes des Vermessungseinrichtung 22 kann auf einen Touchiervorgang des Bearbeitungswerkzeugs 41 an einer Referenzfläche verzichtet werden und es ist ausreichend, mit dem Bearbeitungswerkzeug 41 die Kontur herzustellen und diese mit der Vermessungseinrichtung 22 zu vermessen.

In Fig. 7 ist dargestellt, welche Kontur 50 bei der Querseitenbewegung des Werkzeugs 41 unter Berücksichtigung der Biegung des Werkzeuges 41 sich tatsächlich im Werkstück 8 einstellt. Der Vorschub in Querrichtung erfolgt für eine vorgegebene Strecke S, wobei nach Erzeugen des schrittweisen Vorschubs in Querrichtung das in das Werkstück 8 eingetauchte Bearbeitungswerkzeug 41 wieder aus dem Werkstück 8 herausgefahren wird. Aufgrund der Biegung des Werkzeugs 41, und einer gewissen Trägheit des Systems ergibt sich ein nichtbearbeiteter Restbereich 51, dessen Größe durch die Vermessung der Kontur 50 festgestellt wird. Aus der Größe dieses Bereichs 51 lässt sich ein Korrekturwert für den Bearbeitungsplan ermitteln bzw. ein neuer Bearbeitungsplan erstellen. Damit erhöht sich die Genauigkeit des bearbeiteten Werkstücks 8.

Dabei wird auch der Einfluss des Materials des Werkstücks 8 und der Zustand der Bearbeitungsmaschine 5 berücksichtigt, wie beispielsweise bedingt durch einen Verschleiß in den Lagern und das dadurch hervorgerufene Spiel.

## Patentansprüche

1. Verfahren zur Steuerung einer Bearbeitungsmaschine (5), umfassend folgende Schritte:
- Einbringen einer Kontur (34, 35, 50) in Längsvorschubrichtung des Bearbeitungswerkzeugs (23, 40, 41) in das zu bearbeitenden Werkstück (8) derart, dass die Kontur (34, 35, 50) der Kontur des Bearbeitungswerkzeuges (23, 40, 41) entspricht;
- Vermessen der durch die Bearbeitung hergestellten Kontur (34, 35, 50) im Werkstück (8);
- Anpassen des Bearbeitungsplans unter Berücksichtigung der ermittelten Werkzeugkontur, **dadurch gekennzeichnet, dass** weiterhin eine Bearbeitung des Werkstücks (8) in Querrichtung erfolgt und dass anhand der Vermessung der durch diese Bearbeitung erzeugten Kontur (50) die Biegung des Werkzeugs (23, 40, 41) ermittelt und der Bearbeitungsplan unter Berücksichtigung der Biegung angepasst wird.

2. Verfahren nach Anspruch 1, **dadurch gekennzeichnet, dass** das Einbringen der Kontur (34, 35, 50) mit einer relevanten Werkzeugbelastung erfolgt.

3. Verfahren nach einem der Ansprüche 1 oder 2, **dadurch gekennzeichnet, dass** eine Referenzfläche (32) die Teil des Werkstücks (8) ist, in einem Bereich außerhalb des eigentlichen Bearbeitungsbereichs des Werkstücks (8) angeordnet ist, welcher bei der Endbearbeitung des Werkstücks (8) keine Rolle spielt, wobei die Kontur in diese Referenzfläche eingebracht wird.

## Claims

1. A method for controlling a machining device (5), comprising the following steps:
- creating a contour (34, 35, 50) in the longitudinal feed direction of the machining tool (23, 40, 41) in the workpiece (8) to be machined such that said contour (34, 35, 50) corresponds to the contour of the machining tool (23, 40, 41);
- scanning the contour (34, 35, 50) in the workpiece (8) as produced by machining;
- adapting the machining schedule allowing for the tool contour thus determined,
**characterized in that** machining of said workpiece (8) in the transverse direction is further carried out and that with reference to the scan of said contour (50) produced by said machining the flexure of said tool (23, 40, 41) is determined and the machining schedule is adjusted allowing for said flexure.

2. The method as defined in claim 1, **characterized in that** the creation of said contour (34, 35, 50) is carried out under a relevant tool load.

3. The method as defined in claim 1 or claim 2, **characterized in that** a reference surface (32) forming part of said workpiece (8) is disposed in a region outside the actual machining range of said workpiece (8), which region is of no significance for the final machining of said workpiece (8), said contour being produced in this reference surface.

## Revendications

1. Procédé pour la commande d'une machine d'usinage (5), comportant les étapes suivantes :
- introduction d'un contour (34, 35, 50) dans le dispositif d'avancement longitudinal de l'outil d'usinage (23, 40, 41) dans la pièce (8) à usiner, de telle sorte que le contour (34, 35, 50) corresponde au contour de l'outil d'usinage (23, 40, 41) ;
- mesurage du contour (34, 35, 50) fabriqué par l'usinage dans la pièce (8) ;
- adaptation du plan d'usinage compte tenu du contour d'outil déterminé, **caractérisé en ce qu'**on a également un usinage de la pièce (8) dans le sens transversal et **en ce que** la flexion de l'outil (23, 40, 41) est déterminée à l'aide du mesurage du contour (50) généré par cet usinage et le plan d'usinage est adapté en prenant en compte la flexion.

2. Procédé selon la revendication 1, **caractérisé en ce que** l'introduction du contour (34, 35, 50) s'effectue avec une charge d'outil importante.

3. Procédé selon l'une quelconque des revendications 1 ou 2, **caractérisé en ce qu'**une surface de référence (32), qui fait partie de la pièce (8), est disposée dans une zone à l'extérieur de la zone d'usinage proprement dite de la pièce (8), qui ne joue aucun rôle lors de l'usinage final de la pièce (8), le contour étant introduit dans cette surface de référence.
